# EUROPÄISCHE PATENTSCHRIFT

(11) **EP 4 093 549 B1**
(45) Veröffentlichungstag und Bekanntmachung des Hinweises auf die Patenterteilung: **02.08.2023**
(21) Anmeldenummer: 22722209.8
(22) Anmeldetag: 11.04.2022
(51) Int. Cl.: B02C 13/16, B02C 13/288, B02C 13/286

(54) **QUERSTROMZERSPANER ZUM ZERKLEINERN VON MATERIAL**
CROSS-FLOW SHREDDER FOR COMMINUTING MATERIAL
CONCASSEUR À FLUX TRANSVERSAL POUR BROYAGE DU MATÉRIAU

(30) Priorität: 12.04.2021 LU 102777
(43) Veröffentlichungstag der Anmeldung: 30.11.2022
(73) Patentinhaber: Terion AG, 9470 Buchs (CH)
(72) Erfinder: DREISMANN, Martin, 97350 Mainbernheim (DE); MERKEL, Peter, 97318 Kitzingen (DE)
(74) Vertreter: Tegethoff, Sebastian
(86) Internationale Anmeldenummer: PCT/EP2022/059602
(87) Internationale Veröffentlichungsnummer: WO 2022/218909

(56) Entgegenhaltungen:
- WO-A1-2017/032363
- DE-A1- 10 045 241
- DE-A1- 10 228 471
- DE-A1-102017 103 844

## Beschreibung

### Gebiet der Erfindung

Die vorliegende Erfindung bezieht sich auf einen Querstromzerspaner zum Zerkleinern von Material mit integrierten staubdichten Fördereinrichtungen und Luftrückführung sowie ein Verfahren zur Zerkleinerung von Material unter Verwendung des erfindungsgemäßen Querstromzerspaners.

### Hintergrund und relevanter Stand der Technik

Dem Recycling von Materialien geht üblicherweise eine Auftrennung der Materialien in Fraktionen gleichartiger Stoffe voraus. Dazu werden die in einer Mischung enthaltenen Stoffe zerkleinert, damit diese dann aufgetrennt werden können.

Im Stand der Technik sind bereits Vorrichtungen beschrieben, welche zur Zerkleinerung von Stoffen verwendet werden. In der veröffentlichten deutschen Patentanmeldung mit dem Aktenzeichen DE 100 62 947 A1 wird eine Aufbereitungseinrichtung beschrieben, welche eine Zerkleinerungseinrichtung aufweist, die die zu recycelnden Geräte in ihre Materialbestandteile zerlegt. Vorhandene Kunststoffschäume werden dabei pulverisiert, wobei die Poren geöffnet werden. In den Poren enthaltenes Gas oder anderweitige flüchtige Substanzen werden somit in der Zerkleinerungseinrichtung frei. An die Zerkleinerungseinrichtung ist eine Auffangeinrichtung angeschlossen, die diese freigesetzten flüchtigen Stoffe abführt und sammelt. Das von der Zerkleinerungseinrichtung abgegebene zerkleinerte Material wird zusätzlich in eine Ausgaseinrichtung überführt, in der es genügend Zeit hat, weiter flüchtige Stoffe abzugeben. In dieser Ausgaseinrichtung kann der Anteil der flüchtigen Stoffe von dem festen Material getrennt werden, der oberflächlich gebunden war. Die Auffangeinrichtung ist auch an die der Zerkleinerungseinrichtung folgende Ausgaseinrichtung angeschlossen und führt die flüchtigen Stoffe ab.

Weiterhin ist aus der veröffentlichten deutschen Patentanmeldung mit dem amtlichen Aktenzeichen DE 43 00 784 A1 ein Verfahren und eine Vorrichtung zur Zerkleinerung von zu entsorgenden Geräten bekannt, die Hartschaum- oder Hartkunststoffe aufweisen, insbesondere zur emissionsfreien Rückgewinnung von Fluorkohlenwasserstoff aus Polyurethanschaumisolierungen und anderen Bestandteilen, insbesondere von Kühlgeräten und Kühlschränken, wobei der Hartschaum- oder die Hartkunststoffe zusammen mit den übrigen Geräteteilen in einer Zerkleinerungseinrichtung zerkleinert werden und wobei die Zerkleinerung in einem gegenüber der Umgebung abgeschlossenen Raum erfolgt.

Aus der veröffentlichten deutschen Patentanmeldung mit dem amtlichen Aktenzeichen DE 37 13 477 C1 ist eine Vorrichtung zum Zerkleinern von Behältern mit hochbrennbarem Inhalt bekannt. Die Zerkleinerung erfolgt in einem luftdicht abgeschlossenen Arbeitsraum, der mittels Stickstoff inertisiert ist. Bei den Behältern handelt es sich beispielsweise um Spraydosen.

In der veröffentlichten deutschen Patentanmeldung mit dem amtlichen Aktenzeichen DE 102 28 471 A1 wird eine Zerkleinerungseinrichtung mit einem Zerkleinerungsraum offenbart, in dem zur Durchführung eines Zerkleinerungsprozesses wenigstens ein in einem unteren Bereich des Zerkleinerungsraums umlaufendes stumpfes Schlagwerkzeug angeordnet ist, mit einer Trocknungseinrichtung, die an den Zerkleinerungsraum angeschlossen ist, um aus dem Zerkleinerungsraum einen Gasstrom abzuziehen, diesen zu trockenen und dem Zerkleinerungsraum zur Trocknung des Mahlguts wieder zuzuleiten. Der Zerkleinerungsraum ist dabei ebenfalls inertisierbar.

Die veröffentlichte internationale Patentanmeldung WO 2017/032363 A1 betrifft eine Einheit zum Zerkleinern von Material mittels eines Querstromzerspaners, mit einer Zuführeinrichtung zum Zuführen von zu zerkleinerndem Material in den Querstromzerspaner und wenigstens einer Austragsvorrichtung zum Austragen des zerkleinerten Materials, wobei dass die Einheit transportabel ausgeführt oder mit Mitteln zum Transport kombinierbar ist und die Austragsvorrichtung aus einer Gebrauchsstellung für einen Betrieb des Querstromzerspaners in eine Nichtgebrauchsstellung für einen Transport der Einheit, und aus der Nichtgebrauchsstellung für den Transport der Einheit in die Gebrauchsstellung für den Betrieb des Querstromzerspaners überführbar ist.

Die veröffentlichte deutsche Patentanmeldung DE 100 45 241 A1 offenbart ein Verfahren und eine Anlage zum Aufbereiten von als Stückgut vorliegendem Abfall (A), insbesondere von Abfall, der eine flüchtige Komponente enthält. Abfall (A) wird unter Vakuum mit einer in einem evakuierbaren Behälter (2) angeordneten Einrichtung (4) zerkleinert und die im Behälter (2) beim Zerkleinern des Abfalls (A) freigesetzte flüchtige Komponente (K) wird abgesaugt und einer Kondensationsanlage (68) zugeführt. In dieser wird zumindest ein Teil der flüchtigen Komponente (K) verflüssigt und zum Abtransport gesammelt.

In der veröffentlichten deutschen Patentanmeldung DE 10 2017 103 844 A1 wird eine Vorrichtung zur Aufbereitung von Materialien mit einem Gehäuse offenbart, in dem wenigstens eine Welle drehbar gelagert ist, an der wenigstens ein Querelement angebracht ist, wobei die Welle innerhalb eines Siebelementes angeordnet ist, wobei die Grundfläche des Siebelementes als Polygon ausgebildet ist.

### Aufgabe der Erfindung

Es ist Aufgabe der vorliegenden Erfindung einen Querstromzerspaner zur Zerkleinerung mit einer verminderten Staubentwicklung zur Verfügung zu stellen.

### Zusammenfassung der Erfindung

Die vorliegende Erfindung stellt eine Vorrichtung zur Zerkleinerung von Mahlgut, umfassend eine Aufgabeöffnung für Mahlgut, einer Zuführeinrichtung, einen Querstromzerspaner, zwei Schneckenförderer zum Fördern des Mahlguts und einen staubdichten Zwischenbunker, wobei die beiden Schneckenförderer auf der jeweiligen Eintragsseite staubdicht mit dem Querstromzerspaner und auf der Austragsseite staubdicht mit dem Zwischenbunker verbunden sind, wobei der Zwischenbunker über ein Schlauch- oder Rohrsystem mit dem Querstromzerspaner verbunden ist, und der Zwischenbunker eine mit einem Schieber verschließbare Austragsöffnung aufweist.

Es ist weiterhin vorgesehen, dass die Austragsöffnung des Zwischenbunkers in einem Bereich angeordnet ist, bei dem das Gehäuse des Zwischenbunkers eine geringere Höhe im Vergleich zum übrigen Teil des Zwischenbunkers aufweist.

In einem weiteren Aspekt der erfindungsgemäßen Vorrichtung sind Siebe zur Trennung von Mahlgut mit gewünschter Korngröße und/oder -form am Ausgang des Querstromzerspaners angeordnet.

Bei der Vorrichtung nach der Erfindung kann die Aufgabeöffnung oberhalb des Querstromzerspaners angeordnet sein.

Es ist erfindungsgemäß zudem vorgesehen, dass zwischen Aufgabeöffnung und Querstromzerspaner zumindest eine Fördereinrichtung angeordnet ist.

In einer weiteren Ausführungsform der Vorrichtung ist zumindest eine Fördereinrichtung als Kratzketten- oder Kettengurtförderer ausgebildet.

Die Vorrichtung kann in einem weiteren Aspekt eine Steuereinrichtung zur Steuerung des Schiebers abhängig vom Füllstand des Zwischenbunkers mit Material aufweisen.

In einer weiteren Ausführungsform umfasst die Vorrichtung eine Schneckenförderung, welche oberhalb des Bodens des Zwischenbunkers angeordnet ist.

Weiterhin kann die Vorrichtung eine Einrichtung zur Bestimmung der Füllhöhe des Materials im Zwischenbunker umfassen.

in einem weiteren Aspekt gemäß der vorliegenden Offenbarung ist die Einrichtung zur Bestimmung der Füllhöhe des Materials mit der Steuereinrichtung zur Steuerung des Schiebers verbunden.

Es ist erfindungsgemäß zudem vorgesehen, dass die Vorrichtung in einem diese umgebenden Rahmen angeordnet ist.

Die vorliegende Erfindung betrifft auch ein Verfahren zur Zerkleinerung von Mahlgut, umfassend die Schritte
- Aufgabe des Mahlgutes in eine Aufgabeöffnung;
- Transport des Mahlguts in einen Querstromzerspaner;
- Überführen des zerkleinerten Mahlguts in einen Zwischenbunker (5) über zumindest zwei staubdicht mit dem Querstromzerspaner (3) und Zwischenbunker (5) verbundene Schneckenförderer (4);
- Austrag des zerkleinerten Mahlguts aus dem Zwischenbunker (5) über eine Austragsöffnung (26), wobei ein Schieber (25) an der Austragsöffnung (26) nur bei Erreichen einer zuvor definierten Füllhöhe des zerkleinerten Mahlguts im Zwischenbunker (5) geöffnet wird;
- Kontrolle der Rückführung des im Zwischenbunker (5) erzeugten Luftstroms in den Querstromzerspaner (3) durch ein Rohr- oder Schlauchsystem (6) über die Öffnung oder das Schließen des Schiebers (25) an der Austragsöffnung des Zwischenbunkers (5).

Es ist weiterhin vorgesehen, dass die Rückführung und Kontrolle des im Zwischenbunker erzeugten Luftstrom in den Querstromzerspaner bei einem leeren Zwischenbunker über einen verschlossenen Schieber an der Austragsöffnung gesteuert wird und bei einem zumindest teilweise gefüllten Zwischenbunker über das im Zwischenbunker vorhandene Material gesteuert wird, welches die Austragsöffnung des Zwischenbunkers verschließt. In diesem Fall kann der Schieber an der Austragsöffnung geöffnet sein, um Material aus dem Zwischenbunker zu lassen.

Das Verfahren kann in einer weiteren Ausführungsform den Schritt umfassen, dass das Mahlgut durch eine Aufgabeöffnung, welche drei Umrandungsbleche aufweist, zugeführt wird und durch eine zwischen Aufgabeöffnung und Querstromzerspaner angeordnete Fördereinrichtung in den Querstromzerspaner transportiert wird.

In einem weiteren Aspekt der Erfindung umfasst das Verfahren den Schritt, dass über zumindest ein Sieb, welches am Ausgang des Querstromzerspaners angeordnet ist, die gewünschte Korngröße und/oder -form eingestellt wird.

Weiterhin kann das Verfahren den Schritt umfassen, dass die Rückführung und Kontrolle des im Querstromzerspaner erzeugten Luftstroms zusätzlich über die Menge des in die Aufgabeöffnung zugeführten Materials gesteuert wird.

Weitere Aspekte, Merkmale und Vorteile der vorliegenden Erfindung sind für den Fachmann leicht der folgenden detaillierten Beschreibung zu entnehmen, da zur Veranschaulichung bevorzugte Ausführungsformen und Implementierungen beschrieben werden. Die vorliegende Erfindung kann auch in anderen, unterschiedlichen Ausführungsformen ausgebildet sein und beschriebene Details können in verschiedenen offensichtlichen Aspekten modifiziert werden, alle ohne Abweichung von der Lehre und Umfang der vorliegenden Erfindung. Dementsprechend sind die Zeichnungen und Beschreibungen als illustrativ und nicht als einschränkend zu verstehen.

### Zusammenfassung der Abbildungen

Die Erfindung wird anhand von Abbildungen beschrieben. Es versteht sich, dass die in den Abbildungen beschriebenen Ausführungsformen und Aspekte der Erfindung nur Beispiele sind und den Schutzbereich der Ansprüche in keiner Weise einschränken. Die Erfindung wird durch die Ansprüche und ihre Beschreibung definiert. Es versteht sich, dass Merkmale eines Aspekts oder einer Ausführungsform der Erfindung mit einem Merkmal eines anderen Aspekts oder anderer Aspekte anderer Ausführungsformen der Erfindung kombiniert werden können, es zeigt:
FIG. 1 eine perspektivische Ansicht eines Querstromzerspaners nach der vorliegenden Erfindung.
FIG. 2 eine perspektivische Ansicht in einer Ausführungsform als Transportcontainer mit umgebenden Wänden.
FIG. 3 zeigt einen leeren Zwischenbunker gemäß der vorliegenden Erfindung.
FIG. 4 zeigt einen Zwischenbunker gemäß der vorliegenden Erfindung, der mit Material gefüllt ist.

### Ausführliche Beschreibung der Erfindung

Die technische Aufgabe wird durch die unabhängigen Ansprüche gelöst. Die abhängigen Ansprüche behandeln weitere spezifische Ausführungsformen der Erfindung.

Die vorliegende Erfindung bezieht sich auf einen Querstromzerspaner, der zusammen mit weiteren Fördergeräten und einem Pufferbehälter in einem Rahmen, wie aus dem Güterverkehr bekannt, angeordnet ist und dessen Luftrückführungssystem die durch die Rotation der Ketten im Zerspaner erzeugten starken Luftströme kontrolliert, im System hält und dadurch einen weitestgehend staubfreien Betrieb ermöglicht, was als vorteilhaft angesehen wird.

Weiterhin weist der Querstromzerspaner gemäß der vorliegenden Erfindung als Austrag Schneckenförderer auf, vorzugsweise zwei Schneckenförderer, und verzichtet auf die Verwendung von Transportbändern. Beide Schneckenförderer sind auf der Eintragsseite staubdicht mit dem Querstromzerspaner und auf der Austragsseite staubdicht mit dem Zwischenbunker verbunden. Der Zwischenbunker wiederum, ist ebenfalls staubdicht ausgelegt und mit einem Verschlussschieber am Austrag versehen, wobei es sich um einen mechanisch, elektrisch, hydraulisch oder auch händisch verschließbaren Verschlussschieber handeln kann. Ein Schlauch- oder Rohrsystem verbindet den Zwischenbunker mit dem Querstromzerspaner und erlaubt so die Rückführung des Luftstroms in den Querstromzerspaner. Dabei ist das Schlauch- und Rohrsystem so ausgelegt ist, dass eine Zirkulation der Luft gewährleistet ist.

Der Querstromzerspaner saugt aufgrund des Wirkprinzips der Zerkleinerungswerkzeuge bis zu 6.000 Nm³ Luft, durch die Materialeintragsöffnung an. Diese Luft wird im Zerspaner beschleunigt und liegt im Bereich der Wand als laminare Luftströmung an, im restlichen Reaktionskessel ist die Strömung chaotisch. Bei bisherigen Konstruktionen wird dieser Luftstrom zusammen mit dem Material durch die Siebe auf ein Transportsystem entlassen mit all den verbundenen unerwünschten Effekten wie Staubentwicklung bzw. -freisetzung und Verschmutzung durch umherwirbelnde leichte Materialbestandteile.

Um diesem Effekt zu vermeiden, wird bei einer Vorrichtung gemäß der vorliegenden Erfindung die Luftströmung durch die Siebe in den nicht durch Material belegten Bereich der Schneckenförderer geleitet und erst dann weiter in den Zwischenbunker, wo sich die Luftströmung aufgrund des größeren Raumvolumen entspannt.

Um zu verhindern, dass sich im System aus Querstromzerspaner, Fördereinrichtungen (Schneckenförderer) und Zwischenbunker ein statischer Druck, der einen Materialfluss von Feinkorn verhindert, einstellt, wird der Zwischenbunker über ein Schlauch- oder Rohrsystem mit dem Querstromzerspaner so verbunden, so dass dieser die benötigte Luft bevorzugt aus diesem Schlauch- oder Rohrsystem erhält.

Die im Querstromzerspaner befindliche Luft wird durch in seiner Wand befindliche Lochsiebe in die Schneckenförderer gezwungen. Die Luft muss der Führung der Schnecken folgend in den Zwischenbunker fließen und würde ohne Rückführung zu einem Gegendruck aufgestaut. Dieser Gegendruck führt zu einem statischen Druck, wenn sich ein Gleichgewicht zwischen Luftdruck aus dem Querstromzerspaner und Luftdruck im Zwischenbunker einstellt. Diesen Gegendruck gilt es zu verhindern, indem die sich im Zwischenbunker aufstauende Luft über das Rohr- oder Schlauchsystem entweichen kann. Dieser Weg wird vereinfacht durch ein Ansaugen der Luft.

Die zurückgeführte Luftmenge wird durch die Drehzahl der Zerkleinerungswerkzeuge, z.B. Ketten, gesteuert. Die an der Wand anliegende laminare Luftströmung erzeugt einen proportional zu der Strömungsgeschwindigkeit ansteigenden Sog und saugt so die im Rohr- oder Schlauchsystem befindliche Luft an. Dadurch wird auch die Luft aus dem Zwischenbunker angesaugt und so der zuvor beschriebene statische Druck vermieden. Je schneller also die Zerkleinerungswerkzeuge rotieren, desto schneller wird die Luftströmung und konsequenterweise stärker der Sog aus dem Rohr- bzw. Schlauchsystem.

Umluft - also Luft von außen - wird immer angesaugt, wobei der Anteil der Luft aus dem Zwischenbunker variiert werden kann. Sollte jedoch die Materialzuführung in den Querstromzerspaner mit Material blockiert sein, so wird die Luft nur aus dem Zwischenbunker gezogen, zumindest für die Zeit der Blockade. Eine solche kann aber auch gezielt herbeigeführt werden, indem die Beschickung der Anlage entsprechend gesteuert wird. Erfindungsgemäß können auch Ventile zur Steuerung der Luftzufuhr im Zwischenbunker bzw. zur Steuerung woher die Luftzufuhr im Zwischenbunker stammt vorgesehen sein.

Die in diesem System dem Querstromzerspaner nachgeschalteten staubdichten Schneckenförderer und der ebenfalls staubdichte Zwischenbunker im Zusammenwirken mit der Rückführung der Luft in den Querstromzerspaner aus dem Zwischenbunker durch das Schlauch- und Rohrsystem bewirken eine Vielzahl positiver Effekte. Zum einen saugt der Querstromzerspaner im Betrieb wesentlich weniger Luft durch die Eintragsöffnung an, zum anderen unterstützt der stetige Luftstrom den Materialaustrag und wirkt besonders bei leichten Materialien durchsatzsteigernd. Des Weiteren kann es im System nicht mehr zu einem Aufbau von statischem Druck kommen, bei dem dann der Querstromzerspaner seine Luft durch die Materialeintrittsöffnung entlassen würde, was dem Materialeintrag entgegenwirken würde.

Der wichtigste Effekt ist jedoch der, dass der Querstromzerspaner durch die vorhandene Luftrückführung nahezu staubfrei betrieben werden kann. Allein die erfindungsgemäße Anordnung des Schlauch- und Rohrsystems zwischen Zwischenbunker und Querstromzerspaner in Zusammenhang mit den staubdichten Verbindungen und Elementen sind schon ausreichend, um die zuvor genannten positiven Effekte zu erzielen.

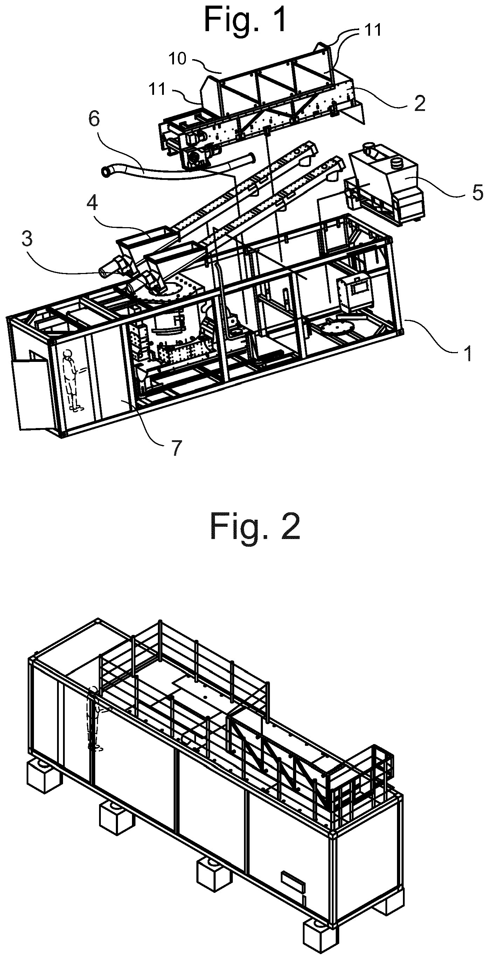

FIG. 1 zeigt eine Ausführungsform eines Querstromzerspaner nach der vorliegenden Erfindung, welcher in einem Rahmen 1 eines Transportcontainers angeordnet ist. An einem Ende des Rahmens befindet sich ein abgetrennter Steuerraum 7, welcher in Form eines Bereichs ausgebildet sein kann und welcher zur Bedienung, dem Aufbau der elektrotechnischen Installationen und Steuerung des Querstromzerspaner vorgesehen ist. Dieser Steuerraum 7 kann, muss aber nicht durch Trennwände als abgeschlossener und klimatisierter staubfreier Raum ausgebildet sein. In einer anderen Ausführungsform kann der Steuerraum 7 auch offen ausgestaltet sein.

Weiterhin ist in FIG. 1 ein Element zur Zuführung des Mahlguts über eine integrierten Fördereinrichtung 2 gezeigt. Die Fördereinrichtung 2 kann als Kratzkettenförderer ausgebildet sein. Die Aufgabeöffnung 10 ist oberhalb der Fördereinrichtung 2 angeordnet und ist bei der in FIG. 1 gezeigten Ausführungsform an drei Seiten von Umrandungsbleche 11 umgeben, um ein sicheres Befüllen mit Material zu gewährleisten. Diese Umrandungsbleche 11 können derart installiert werden, dass wahlweise eine Befüllung des Kratzbodens von der rechten oder der linken Rahmenseite erfolgen kann. Die Fördereinrichtung 2 (Kratzkettenförderer) gibt das Material in den Querstromzerspaner 3 auf, der es zerkleinert. Durch Siebe (nicht gezeigt), die gleichzeitig die Korngröße und -form definieren, wird das Material in die Austragsschnecken 4 geleitet, die es wiederum in den Zwischenbunker 5 fördern. Zwischen dem Zwischenbunker 5 und dem Querstromzerspaner 3 ist eine Schlauch- oder auch Rohrleitung 6 angeordnet, die den Luftstrom, der durch den Querstromzerspaner 3 erzeugt wird, wieder in den Querstromzerspaner 3 zurückführt.

Der Zwischenbunker 5 verfügt an der Austragsseite über einen Schieber (nicht gezeigt), der erst geöffnet wird, wenn der Austrag bzw. der Bereich um die Austragsöffnung des Zwischenbunkers durch das eingebrachte Material abgedichtet worden ist, um so zu vermeiden, dass der Feinanteil des Mahlgutes unkontrolliert in den Arbeitsraum um das System herum abgegeben wird. Erst wenn die Austragsöffnung des Zwischenbunkers hinreichend abgedichtet ist, wird das Material durch Öffnung der Austragsöffnung aus dem System ausgetragen. Dazu wird der Schieber, welcher die Austragsöffnung verschließt, geöffnet bzw. verschoben. Der Zwischenbunker 5 kann drehbar gelagert sein und kann wahlweise das zerkleinerte Material auf die rechte oder die linke Seite des Rahmens austragen, in dem dieser angeordnet ist.

FIG. 2 zeigt den Querstromzerspaner nach FIG. 1, wobei dieser vollständig von Wänden umgeben ist und in den Maßen eines Transportcontainers ausgebildet ist. Damit kann der Querstromzerspaner auf LKWs oder anderen üblichen Transportsystemen zu einem Einsatzort bewegt werden.

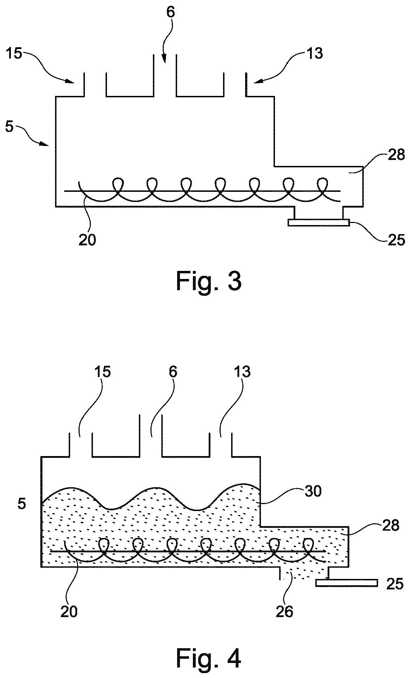

FIG. 3 zeigt einen leeren Zwischenbunker 5 mit einem ersten Eintrag 13 des ersten Schneckenförderers, welcher vom Querstromzerspaner kommt, und einem zweiten Eintrag 15 eines zweiten Schneckenförderers, welcher ebenfalls vom Querstromzerspaner kommt. Im unteren Teil des Zwischenbunkers befindet sich eine Förderschnecke 20, welche Material in Richtung eines Schnabels 28 des Zwischenbunkers 5 fördert, wobei der Schnabel 28 an seiner Unterseite eine Austragsöffnung 26 hat, die in FIG. 4 mit einem Schieber 25 verschlossen ist. Durch den geschlossenen Schieber 25 kann keine Luft aus dem Zwischenbunker 5 entweichen und wird somit durch das Schlauch- oder Rohrsystem 6 wieder in den Querstromzerspaner (nicht gezeigt) zurückgeführt.

Der als Schnabel 28 bezeichnete Teil des Zwischenbunkers 5 zeichnet sich dadurch aus, dass dieser Teil eine geringere Höhe des Gehäuses 27 bzw. ein geringeres Volumen im Vergleich zum restlichen Volumen des Zwischenbunkers 5 aufweist. Dies hat den technischen Effekt, dass bereits geringere Mengen an Material 30 ausreichen, um die Austragsöffnung 26 zu verschließen, was als vorteilhaft angesehen wird im Hinblick auf die Steuerung der Rückführung des Luftstroms aus dem Querstromzerspaner durch das Schlauch- oder Rohrsystem.

FIG. 4 zeigt einen Zwischenbunker 5, wie auch in FIG. 4 dargestellt, wobei der Zwischenbunker 5 mit Material 30 gefüllt ist. Sobald das Material eine zuvor definierte Höhe im Zwischenbunkers 5 erreicht, kann der Schieber 25 geöffnet werden, um das Material 30 durch die Austragsöffnung 26 auszutragen. Das im Schnabel 28 befindliche Material 30 verhindert, das Luft aus dem Zwischenbunker 5 durch die Austragsöffnung 26 entweichen kann. Sobald der Füllstand des Materials 30 unter die zuvor definierte Höhe fällt, wird der Schieber 25 wieder geschlossen, um zu verhindern, dass Luft durch die Austragsöffnung 26 entweichen kann.

Durch diese erfindungsgemäßen Maßnahmen wird auch das unkontrollierte Austreten von Material bedingt durch den Luftstrom verhindert. Somit beruht die Staubfreiheit auf der Verwendung von staubdichten Schneckenförderern und einem staubdichten Zwischenbunker. Weiterhin beruht die Staubfreiheit auf der Verwendung des Schlauch- oder Rohrsystems zur Luftrückführung zum Querstromzerspaner und der Form des Zwischenbunkers mit dem Schnabel im Bereich der Austragsöffnung sowie der Steuerung der Austragsöffnung des Zwischenbunkers abhängig vom Füllstand des Zwischenbunkers mit Material.

Die Vorteile der vorliegenden Erfindung können wie folgt zusammengefasst werden:
- mobiler Querstromzerspaner im Format üblicher Transportcontainer.
- Verwendung von staubdichten integrierten Transportsystemen für den inneren Transport des Mahlgutes zur Verminderung/Vermeidung der Staubentwicklung im Arbeitsraum um das System
- Verwendung eines staubdicht verschließbaren Zwischenbunkers, um das unkontrollierte Entweichen von Stäuben zu verhindern
- Verwendung eines Luftrückführungssystems zur Kontrolle des Luftstroms
- Verwendung eines Schneckenantriebs zum Austrag des gemahlenen Gutes, wodurch Schüttvorgänge im Gerät vermieden werden.

Die vorstehende Beschreibung der bevorzugten Ausführungsform der Erfindung wurde zum Zwecke der Veranschaulichung und Beschreibung dargestellt. Es ist nicht beabsichtigt, erschöpfend zu sein oder die Erfindung auf die genaue Form offenbar zu begrenzen, und Modifikationen und Variationen sind möglich im Lichte der obigen Lehren oder können aus der Praxis der Erfindung erworben werden. Die Ausführungsform wurde gewählt und beschrieben, um die Prinzipien der Erfindung und ihre praktische Anwendung zu erläutern, damit der Fachmann die Erfindung in verschiedenen Ausführungsformen nutzen kann, wie sie für die jeweilige Verwendung geeignet sind. Es ist beabsichtigt, dass der Umfang der Erfindung durch die beigefügten Ansprüche definiert wird.

### Bezugszeichen

- 1: Rahmen
- 2: Materialaufgabe
- 3: Querstromzerspaner
- 4: Schneckenförderer
- 5: Zwischenbunker
- 6: Schlauch- oder Rohrsystem
- 7: Steuerraum
- 10: Aufgabeöffnung
- 11: Umrandungsbleche
- 13: Eintrag erster Schneckenförderer
- 15: Eintrag zweiter Schneckenförderer
- 20: Schneckenförderung Zwischenbunker
- 25: Schieber Zwischenbunker
- 26: Austragsöffnung Zwischenbunker
- 28: Schnabel Zwischenbunker
- 30: Material

## Patentansprüche

1. Eine Vorrichtung zur Zerkleinerung von Mahlgut, umfassend eine Aufgabeöffnung (10) für Mahlgut, einer Zuführeinrichtung, einen Querstromzerspaner (3), zwei Schneckenförderer (4) zum Fördern des Mahlguts und einen staubdichten Zwischenbunker (5), wobei die beiden Schneckenförderer (4) auf der jeweiligen Eintragsseite staubdicht mit dem Querstromzerspaner (3) und auf der Austragsseite stabdicht mit dem Zwischenbunker (5) verbunden sind, wobei der Zwischenbunker (5) über ein Schlauch- oder Rohrsystem (6) mit dem Querstromzerspaner (3) verbunden ist, und der Zwischenbunker eine mit einem Schieber (28) verschlossene Austragsöffnung (26) aufweist.

2. Die Vorrichtung nach Anspruch 1, wobei die Austragsöffnung (26) des Zwischenbunkers (5) in einem Bereich angeordnet ist bei dem das Gehäuse (27) des Zwischenbunkers (5) eine geringere Höhe im Vergleich zum übrigen Teil des Zwischenbunkers (5) aufweist.

3. Die Vorrichtung nach einem der Ansprüche 1 oder 2, wobei Siebe zur Trennung von Mahlgut mit gewünschter Korngröße und/oder -form am Ausgang des Querstromzerspaners angeordnet sind.

4. Die Vorrichtung nach einem der Ansprüche 1 bis 3, wobei die Aufgabeöffnung (10) oberhalb des Querstromzerspaners angeordnet ist.

5. Die Vorrichtung nach Anspruch 4, wobei zwischen Aufgabeöffnung und Querstromzerspaner zumindest eine Fördereinrichtung angeordnet ist.

6. Die Vorrichtung nach Anspruch 5, wobei die zumindest eine Fördereinrichtung ein Kratzketten- oder Kettengurtförderer ist.

7. Die Vorrichtung nach einem der Ansprüche 1 bis 6, umfassend eine Steuereinrichtung zur Steuerung des Schiebers (28) abhängig vom Füllstand des Zwischenbunkers (5) mit Material (30).

8. Die Vorrichtung nach einem der Ansprüche 1 bis 7, umfassend eine Schneckenförderung (20), welche oberhalb des Bodens des Zwischenbunkers (5) angeordnet ist.

9. Die Vorrichtung nach einem der Ansprüche 1 bis 8, umfassend eine Einrichtung zur Bestimmung der Füllhöhe des Materials (30) im Zwischenbunker (5).

10. Die Vorrichtung nach Anspruch 9, wobei die Einrichtung zur Bestimmung der Füllhöhe des Materials mit der Steuereinrichtung zur Steuerung des Schiebers verbunden ist.

11. Die Vorrichtung nach einem der Ansprüche 1 bis 10, welche in einem diese umgebenden Rahmen (1) angeordnet ist.

12. Ein Verfahren zur Zerkleinerung von Mahlgut, umfassend die Schritte
- Aufgabe des Mahlgutes in eine Aufgabeöffnung (10);
- Transport des Mahlguts in einen Querstromzerspaner (3);
- Überführen des zerkleinerten Mahlguts in einen Zwischenbunker (5) über zumindest zwei staubdicht mit dem Querstromzerspaner (3) und Zwischenbunker (5) verbundene Schneckenförderer (4);
- Austrag des zerkleinerten Mahlguts aus dem Zwischenbunker (5) über eine Austragsöffnung (26), wobei ein Schieber (25) an der Austragsöffnung (26) nur bei Erreichen einer zuvor definierten Füllhöhe des zerkleinerten Mahlguts im Zwischenbunker (5) geöffnet wird;
- Kontrolle der Rückführung des im Zwischenbunker (5) erzeugten Luftstroms in den Querstromzerspaner (3) durch ein Rohr- oder Schlauchsystem (6) über die Öffnung oder das Schließen des Schiebers (25) an der Austragsöffnung des Zwischenbunkers (5).

13. Das Verfahren nach Anspruch 12, wobei das Mahlgut durch eine Aufgabeöffnung (10), welche drei Umrandungsbleche (11) aufweist, zugeführt wird und durch eine zwischen Aufgabeöffnung und Querstromzerspaner (3) angeordnete Fördereinrichtung in den Querstromzerspaner (3) transportiert wird.

14. Das Verfahren nach einem der Ansprüche 12 oder 13, wobei über zumindest ein Sieb, welches am Ausgang des Querstromzerspaners (3) angeordnet ist, die gewünschte Korngröße und/oder -form eingestellt wird.

15. Das Verfahren nach einem der Ansprüche 12 bis 14, wobei die Rückführung und Kontrolle des im Zwischenbunker (5) erzeugten Luftstroms in den Querstromzerspaner (3) bei einem leeren Zwischenbunker (5) über einen verschlossenen Schieber (25) an der Austragsöffnung (26) gesteuert wird.

16. Das Verfahren nach einem der Ansprüche 12 bis 14, wobei die Rückführung und Kontrolle des im Zwischenbunker (5) erzeugten Luftstroms in den Querstromzerspaner (3) bei einem zumindest teilweise gefüllten Zwischenbunker (5) über das im Zwischenbunker (5) vorhandene Material gesteuert wird, welches die Austragsöffnung des Zwischenbunkers (5) verschließt.

## Claims

1. An apparatus for comminuting material to be ground, comprising a feed opening (10) for material to be ground, a feed device, a cross-flow shredder (3), two screw conveyors (4) for conveying the material to be ground and a dust-tight intermediate bunker (5), wherein the two screw conveyors (4) are connected in a dust-tight manner to the cross-flow shredder (3) on the respective feed side and in a rod-tight manner to the intermediate bunker (5) on the discharge side, wherein the intermediate bunker (5) is connected to the cross-flow shredder (3) via a hose or pipe system (6), and the intermediate bunker has a discharge opening (26) closed by a slide valve (28).

2. The apparatus according to claim 1, wherein the discharge opening (26) of the intermediate bunker (5) is arranged in an area where the housing (27) of the intermediate bunker (5) has a lower height compared to the remaining part of the intermediate bunker (5).

3. The apparatus according to any one of claims 1 or 2, wherein screens for separating ground material of desired particle size and/or shape are arranged at the outlet of the cross-flow shredder.

4. The apparatus according to any one of claims 1 to 3, wherein the feed opening (10) is arranged above the cross-flow shredder.

5. The apparatus according to claim 4, wherein at least one conveyor device is arranged between the feed opening and the cross-flow shredder.

6. The apparatus of claim 5, wherein the at least one conveyor is a scraper chain or chain belt conveyor.

7. The apparatus according to any one of claims 1 to 6, comprising a control device for controlling the slide (28) depending on the filling level of the intermediate bunker (5) with material (30).

8. The apparatus according to any one of claims 1 to 7, comprising a screw conveyor (20) arranged above the bottom of the intermediate bunker (5).

9. The apparatus according to any one of claims 1 to 8, comprising means for determining the level of the material (30) in the intermediate bunker (5).

10. The apparatus of claim 9, wherein the means for determining the fill level of the material is connected to the control means for controlling the pusher.

11. The apparatus according to any one of claims 1 to 10, which is arranged in a frame (1) surrounding it.

12. A method of comminuting ground material comprising the steps of
- Feeding the material to be ground into a feed opening (10);
- Transport of the material to be ground into a cross-flow shredder (3);
- Transfer of the crushed material into an intermediate bunker (5) via at least two screw conveyors (4) connected in a dust-tight manner to the cross-flow shredder (3) and intermediate bunker (5);
- Discharge of the comminuted material from the intermediate bunker (5) via a discharge opening (26), wherein a slide (25) at the discharge opening (26) is only opened when a previously defined filling level of the comminuted material in the intermediate bunker (5) is reached;
- Control of the return of the air flow generated in the intermediate bunker (5) to the cross-flow shredder (3) through a pipe or hose system (6) via the opening or closing of the slide valve (25) at the discharge opening of the intermediate bunker (5).

13. The method according to claim 12, wherein the ground material is fed through a feed opening (10), which has three border plates (11), and is transported into the cross-flow shredder (3) by a conveying device arranged between the feed opening and the cross-flow shredder (3).

14. The method according to any one of claims 12 or 13, wherein the desired grain size and/or shape is adjusted via at least one screen arranged at the outlet of the cross-flow shredder (3).

15. The method according to any one of claims 12 to 14, wherein the recirculation and control of the air flow generated in the intermediate bunker (5) into the cross-flow shredder (3) when the intermediate bunker (5) is empty is controlled via a closed gate (25) at the discharge opening (26).

16. The method according to any one of claims 12 to 14, wherein the recirculation and control of the air flow generated in the intermediate bunker (5) into the cross-flow shredder (3) when the intermediate bunker (5) is at least partially filled is controlled via the material present in the intermediate bunker (5) closing the discharge opening of the intermediate bunker (5).

## Revendications

1. Un appareil pour le broyage du matériau, comprenant une ouverture d'alimentation (10) pour le matériau, un dispositif d'alimentation, un concasseur à flux transversal (3), deux transporteurs à vis (4) pour le transport du matériau et une trémie intermédiaire (5) étanche à la poussière, les deux transporteurs à vis (4) sont reliés de manière étanche à la poussière au concasseur à flux transversal (3) du côté de l'alimentation et de manière étanche à la trémie intermédiaire (5) du côté de la décharge, la trémie intermédiaire (5) étant reliée au concasseur à flux transversal (3) par un système de tuyaux ou de tubes (6), et la trémie intermédiaire ayant une ouverture de décharge (26) fermée par une vanne à glissière (28).

2. L'appareil selon la revendication 1, dans lequel l'ouverture de décharge (26) de la trémie intermédiaire (5) est disposée dans une zone où le boîtier (27) de la trémie intermédiaire (5) a une hauteur inférieure à celle du reste de la trémie intermédiaire (5).

3. L'appareil selon l'une des revendications 1 ou 2, dans lequel des cribles permettant de séparer le matériau de la taille et/ou de la forme souhaitées sont disposés à la sortie du concasseur à flux transversal.

4. L'appareil selon l'une des revendications 1 à 3, dans lequel l'ouverture d'alimentation (10) est disposée au-dessus du concasseur à flux transversal.

5. L'appareil selon la revendication 4, dans lequel au moins un dispositif de transport est disposé entre l'ouverture d'alimentation et le concasseur à flux transversal.

6. L'appareil de la revendication 5, dans lequel l'au moins un convoyeur est une chaîne à raclettes ou un convoyeur à courroie à chaîne.

7. L'appareil selon l'une des revendications 1 à 6, comprenant un dispositif de commande pour contrôler la glissière (28) en fonction du niveau de remplissage de la trémie intermédiaire (5) avec du matériel (30).

8. L'appareil selon l'une des revendications 1 à 7, comprenant un convoyeur à vis (20) disposé au-dessus du fond de la trémie intermédiaire (5).

9. L'appareil selon l'une des revendications 1 à 8, comprenant des moyens pour déterminer le niveau du matériau (30) dans la trémie intermédiaire (5).

10. L'appareil de la revendication 9, dans lequel le moyen de déterminer le niveau de remplissage du matériau est connecté au moyen de commande du poussoir.

11. L'appareil selon l'une quelconque des revendications 1 à 10, qui est disposé dans un cadre (1) l'entourant.

12. Une méthode de broyage d'un matériau broyé comprenant les étapes suivantes
- Alimentation du matériau dans une ouverture d'alimentation (10) ;
- Transport du matériau dans un concasseur à flux transversal (3) ;
- Transfert du matériau broyé dans une trémie intermédiaire (5) via au moins deux convoyeurs à vis (4) reliés de manière étanche à la poussière au concasseur à flux transversal (3) et à la trémie intermédiaire (5) ;
- Déchargement du matériau de la trémie intermédiaire (5) par une ouverture de déchargement (26), dans laquelle une glissière (25) au niveau de l'ouverture de déchargement (26) n'est ouverte que lorsqu'un niveau de remplissage préalablement défini du matériau dans la trémie intermédiaire (5) est atteint ;
- Contrôle du retour du flux d'air généré dans la trémie intermédiaire (5) vers le concasseur à flux transversal (3) par un système de tuyaux ou de flexibles (6) via l'ouverture ou la fermeture de la vanne à tiroir (25) au niveau de l'ouverture de décharge de la trémie intermédiaire (5).

13. La méthode selon la revendication 12, dans lequel le matériau est introduite par une ouverture d'alimentation (10), qui comporte trois plaques de bordure (11), et est transportée dans le concasseur à flux transversal (3) par un dispositif de transport placé entre l'ouverture d'alimentation et le concasseur à flux transversal (3).

14. La méthode selon l'une des revendications 12 ou 13, dans laquelle la taille et/ou la forme des grains souhaités est ajustée par l'intermédiaire d'au moins un crible placé à la sortie du concasseur à flux transversal (3).

15. La méthode selon l'une des revendications 12 à 14, dans lequel la recirculation et le contrôle du flux d'air généré dans la trémie intermédiaire (5) dans le concasseur à flux transversal (3) lorsque la trémie intermédiaire (5) est vide sont contrôlés par une porte fermée (25) au niveau de l'ouverture de décharge (26).

16. La méthode selon l'une des revendications 12 à 14, dans lequel la recirculation et le contrôle du flux d'air généré dans la trémie intermédiaire (5) dans le concasseur à flux transversal (3) lorsque la trémie intermédiaire (5) est au moins partiellement remplie sont contrôlés par le matériau présent dans la trémie intermédiaire (5) qui ferme l'ouverture de décharge de la trémie intermédiaire (5).
